# EUROPEAN PATENT SPECIFICATION

(11) **EP 4 159 492 B1**
(45) Date of publication and mention of the grant of the patent: **26.06.2024**
(21) Application number: 22179631.1
(22) Date of filing: 17.06.2022
(51) Int. Cl.: B60G 7/00, B60G 11/16, B60B 27/00, B60G 9/02, B62D 7/18, B60B 35/00

(54) **VEHICLE COMPRISING A VEHICLE SUSPENSION STRUCTURE**
FAHRZEUG MIT EINER FAHRZEUGAUFHÄNGUNGSSTRUKTUR
VÉHICULE AVEC UNE STRUCTURE DE SUSPENSION DE VÉHICULE

(30) Priority: 29.09.2021 JP 2021158937
(43) Date of publication of application: 05.04.2023
(73) Proprietor: Suzuki Motor Corporation, Hamamatsu-shi, Shizuoka 432-8611 (JP)
(72) Inventor: NOJIMA, Yoshiki, HAMAMATSU-SHI, 432-8611 (JP)
(74) Representative: Plasseraud IP

(56) References cited:
- EP-A1- 2 896 520
- JP-A- 2000 025 440
- JP-A- 2013 049 353
- JP-A- 2013 071 496
- US-A1- 2015 258 872

## Description

### [Technical Field]

The present invention relates to a vehicle comprising a vehicle suspension structure.

### [Background Art]

A de Dion rear suspension, as an example a suspension of an axle suspension type, is located in the rear part of a vehicle. Such a rear suspension has, for example, an axle beam and carriers provided at both ends of the axle beam and to which hubs are attached, as disclosed in Patent Literature 1, for example. The hubs are rotatably supported via hub bearings provided in the carriers.

In addition, the hub carriers have spring installation parts to which suspension springs of the rear suspension are attached. Therefore, the hub carriers require a predetermined strength against a load in the vehicle height direction. In this example, the inner surface of each hub carrier is formed with a detachable opening that allows the hub bearing to be attached and detached. Furthermore, the hub carrier is provided with an upper overhanging part and a lower overhanging part provided above and below the attachment and detachment opening, and the upper overhanging part and the lower overhanging part are connected by a connection part extending between both overhanging parts and in the vehicle height direction.

With this configuration, it is intended to lessen reduction in strength of the hub carriers in the vehicle height direction due to the attachment and detachment openings that are formed to be large. Furthermore, in the rear suspension, even in a case in which a load in the height direction is applied to the hub carriers due to bumping of the vehicle or the like, it is intended to prevent the hub carriers from being damaged. Another example of a rear suspension structure can be found in Patent Literature 2. Patent Literature 2 discloses the preamble of claim 1.

### [Citation List]

### [Patent Literature]

[Patent Literature 1] JP 2013-071496 A
[Patent Literature 2] JP 2013-049353 A[Summary of Invention]

### [Problems to be Solved by the Invention]

The hub carrier in the above example maintains a constant strength against a load acting in the vehicle height direction. As described above, not only the outer peripheral members of the hub carriers, but also the upper overhanging parts and the lower overhanging parts thereof are provided, and these are connected to form a reinforcing structure.

Therefore, the structure of the above example causes increase in weight of the hub carriers.

In addition, the weight increase of the hub carriers causes increase in weight of the lower parts of the suspension springs, which may affect the vehicle dynamics. Moreover, since the hub carrier is provided with an upper overhanging part and a lower overhanging part, the layout of the hub carrier is limited, and flexibility of design may be reduced. Therefore, there is room for improvement in the structure of the above example in light of reducing a stress concentration with respect to a load in the vehicle height direction input from the suspension springs to the hub carriers, and effectively dispersing a stress to the surrounding members.

The present invention has been made in order to solve the above problems, and an object thereof is to provide a vehicle comprising a vehicle suspension structure capable of reducing a stress concentration with respect to a load in the vehicle height direction input from suspension springs to hub carriers, and capable of effectively dispersing a stress to surrounding members.

### [Means for Solving the Problems]

To achieve the above object, a vehicle comprising a vehicle suspension structure is proposed according to claim 1.

### [Advantageous Effects of Invention]

According to the present invention, it is possible to reduce a stress concentration with respect to a load in the vehicle height direction input from the suspension springs to the hub carriers, and to effectively distribute the stress to the surrounding members.

### [Brief Description of Drawings]

[Figure 1] Figure 1 is a perspective view showing one embodiment of a vehicle suspension structure according to the present invention.
[Figure 2] Figure 2 is an enlarged perspective view showing a hub carrier and others on the right side of Figure 1 in an enlarged manner.
[Figure 3] Figure 3 is a front view of the hub carrier and others of Figure 2, as viewed from the vehicle front side.
[Figure 4] Figure 4 is a side view of the hub carrier and others of Figure 2, as viewed from the inner side in the vehicle width direction.
[Figure 5] Figure 5 is a top view of the hub carrier and the others of Figure 2, as viewed from the vehicle upper side.
[Figure 6] Figure 6 is a bottom view of the hub carrier and others of Figure 2, as viewed from the vehicle lower side.
[Figure 7] Figure 7 is an enlarged perspective view showing a reinforcement member of Figure 2 in an enlarged manner.
[Figure 8] Figure 8 is a perspective view of the hub carrier and others of Figure 2, as viewed from the diagonally downward direction on the inner side in the vehicle width direction.
[Figure 9] Figure 9 is a perspective sectional view taken along line A-A of Figure 8.
[Figure 10] Figure 10 is a perspective sectional view taken along line B-B of Figure 8.
[Figure 11] Figure 11 is an enlarged perspective view of a state in which a drive shaft, a suspension spring, and a lateral rod are fixed to the hub carrier and a connecting member in Figure 1, as viewed from the vehicle inner side.

### [Mode for Carrying Out the Invention]

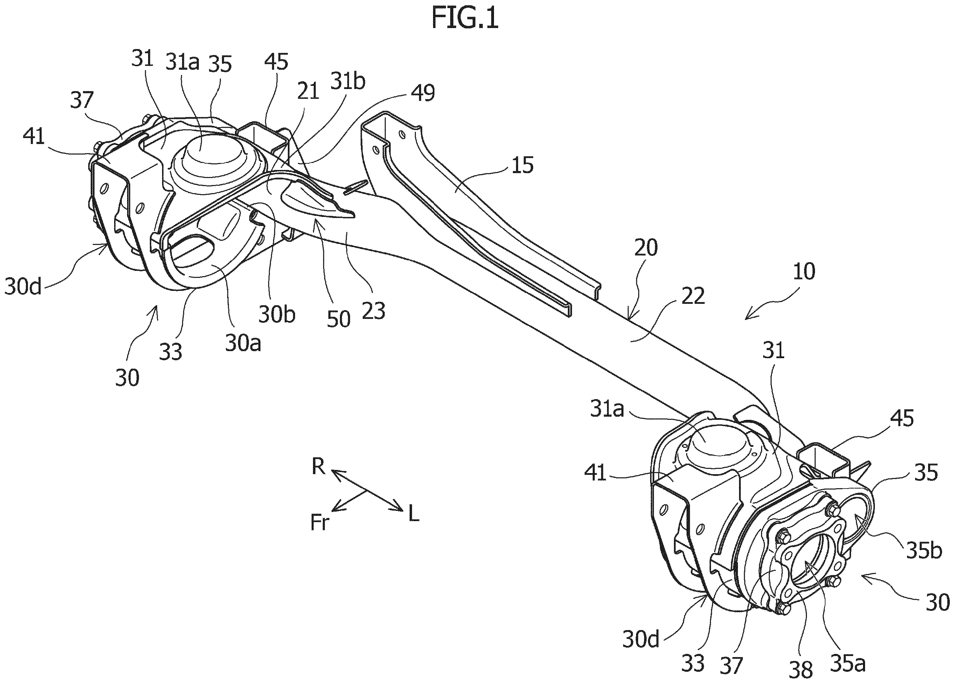

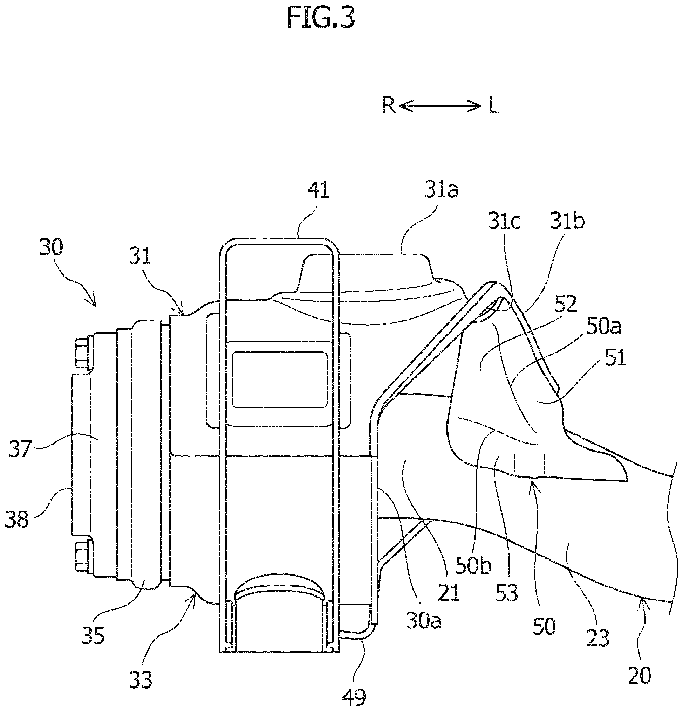

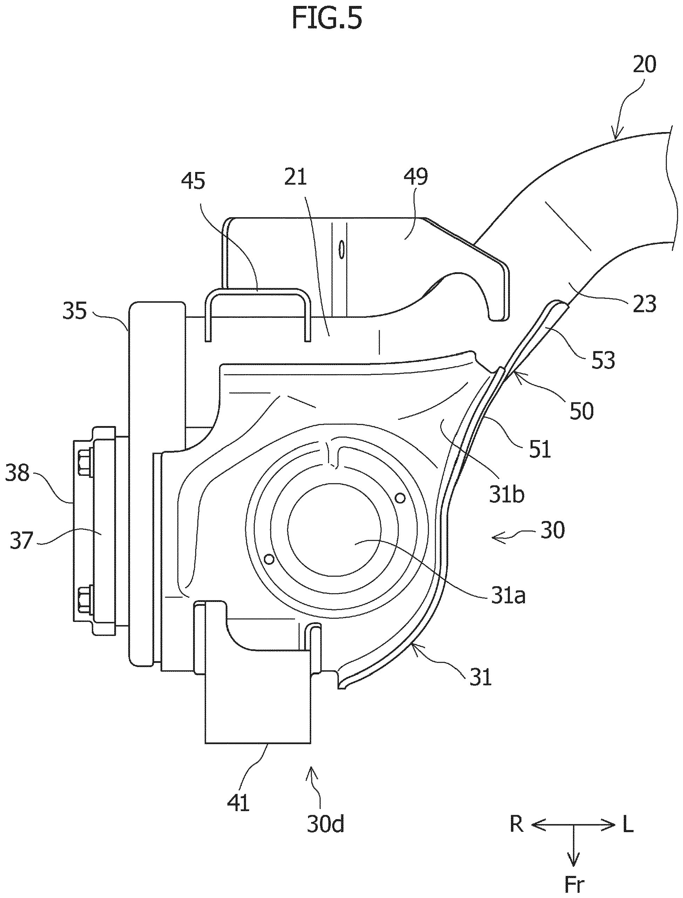

One embodiment of a vehicle suspension structure according to the present invention will be described with reference to the drawings (Figure 1 to Figure 11). In the drawings, an arrow Fr direction indicates a frontward direction in the vehicle front-rear direction. A "front part (front end) and a rear part (rear end)" in the description of the embodiments correspond to a front part and a rear part in the vehicle front-rear direction. Furthermore, an arrow R and an arrow L indicate the right side and the left side when an occupant looks vehicle-frontward.

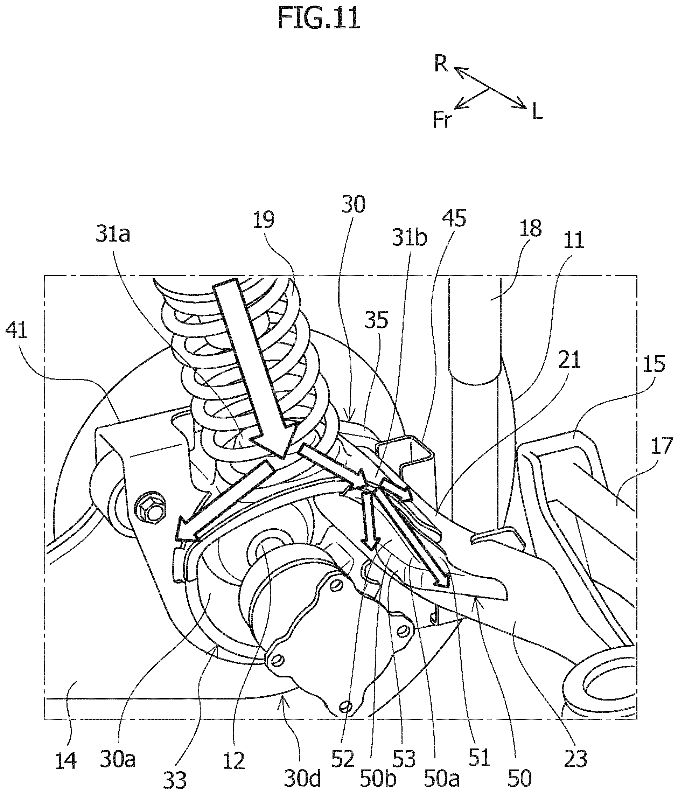

The vehicle suspension structure of the present embodiment will be described by explaining an example of a structure of a rear suspension 10 of an axle suspension type to which rear wheels (wheels) 11 are fixed. As shown in Figure 1 and Figure 11, the rear suspension 10 of the present embodiment includes: hub carriers 30 through which a drive shaft 12 extending in the vehicle width direction is disposed, the hub carriers being provided with hubs (not shown) to which the rear wheels 11 are fixed; and a connecting member 20 that connects the hub carriers 30 on both sides in the vehicle width direction. The hubs are rotatably attached to the hub carriers 30 via hub bearings (not shown).

First, the connecting member 20 will be described. As shown in Figure 1, the connecting member 20 is a member extending in the vehicle width direction overall, and outer parts in the vehicle width direction of the connecting member 20 are provided with connecting parts 21 connected to the hub carriers 30. Furthermore, an intermediate part 22 in the vehicle width direction of the connecting member 20 is offset vehicle-rearward from the drive shaft 12 transmitting a driving force to the rear wheels 11, and extends in the vehicle width direction. A rod fixing bracket 15 to which a lateral rod 17 (Figure 11) is fixed is joined to the intermediate part 22. Furthermore, bent parts 23 that are bent vehicle-rearward and connected to the connecting parts 21 are provided on outer portions in the vehicle width direction of the intermediate part 22.

The bent parts 23 are bent outward in the vehicle width direction toward the vehicle front side. Furthermore, the bent parts 23 extend to be inclined outward in the vehicle width direction toward the vehicle front side, and are connected to inner ends in the vehicle width direction of the connecting parts 21. The connecting parts 21 extend in the vehicle width direction, and outer ends in the vehicle width direction of the connecting parts 21 are inserted and fixed to second through-holes 35b of the hub carriers 30, described later.

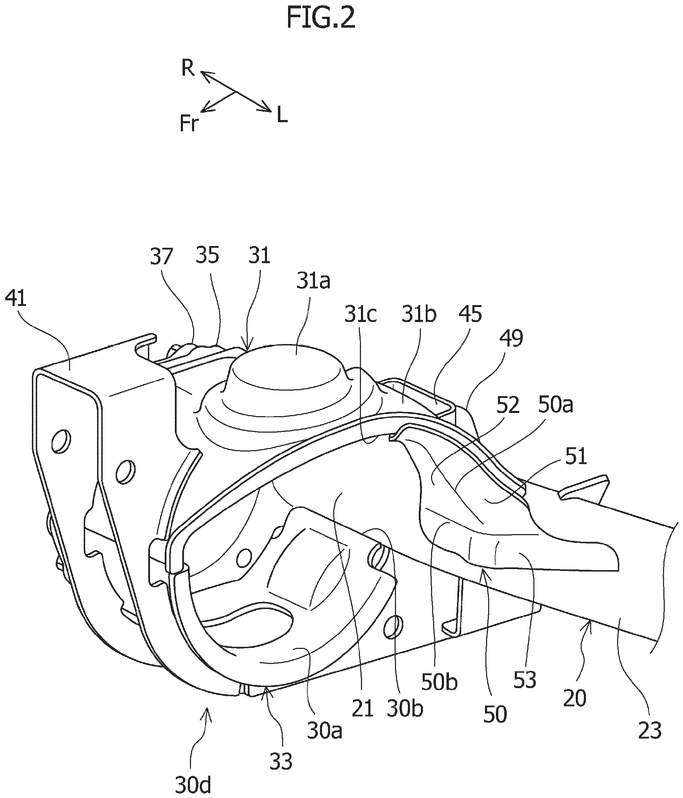

Next, the hub carrier 30 will be described. As shown in Figure 2 to Figure 6, the hub carrier 30 of the present embodiment includes an upper member 31, a lower member 33, an outer member 35, an absorber receiving member 49, a front bracket 41, a rear bracket 45, and a reinforcement member 50. The upper member 31, the lower member 33, the outer member 35, and the reinforcement member 50 are included in a main body of the hub carrier 30, the upper member 31 and the lower member 33 are included in a cylindrical part 30a extending in the vehicle width direction. The reinforcement member 50 extends so as to connect the inside of the cylindrical part 30a and the connecting member 20. It should be noted that Figure 2 to Figure 11 show a configuration of the hub carrier 30 on the right side and its surroundings. The configuration of the hub carrier 30 on the left side and its surroundings is the same as the configuration of the hub carrier 30 on the right side and its surroundings; therefore, description thereof is omitted here. Hereinafter, each member of the hub carrier 30 on the right side will be described.

The upper member 31 is made of a metallic material, has a predetermined length in the vehicle width direction, is curved so as to be convex upward, and forms substantially a semicircle that is convex upward as viewed in the vehicle width direction. Furthermore, an upper part of the upper member 31 is provided with a spring installation part 31a on which a suspension spring 19 is installed. The spring installation part 31a has a substantially circular flat surface that protrudes vehicle-upward from the top of the upper member 31 and faces vehicle-upward. The suspension spring 19 is installed on this surface (Figure 11).

A lower end on the front side of the upper member 31 extends in the vehicle width direction, and the lower member 33 is joined to this part by welding, for example. Furthermore, as shown in Figure 2, an outer end in the vehicle width direction of the upper member 31 is formed in substantially a semicircular shape as described above, and the outer member 35 is joined to this part by welding or the like.

As shown in Figure 2 to Figure 6, an enlarged part 3 1b protruding toward the inner side in the vehicle width direction is provided at a rear part of the upper member 31. The enlarged part 31b protrudes toward the inner side in the vehicle width direction at a rear portion of the cylindrical part 30a, and an inner end in the vehicle width direction of the enlarged part 31b extends along the longitudinal direction of the bent part 23 of the connecting member 20. Specifically, the inner end in the vehicle width direction of the enlarged part 31b is gradually inclined inward in the vehicle width direction toward the vehicle rear side. The inner end in the vehicle width direction the enlarged part 31b and the bent part 23 of the connecting member 20 are formed so as to be continuous along the inclination direction. Furthermore, as described above, a lower portion of the enlarged part 31b is joined to the connecting member 20. Moreover, in this example, the spring installation part 31a is partially disposed in the enlarged part 31b.

The lower end on the rear side of the upper member 31 and the lower end on the rear side portion of the enlarged part 31b extend continuously in the vehicle width direction, and this part is joined to the upper surfaces of the connecting part 21 and the bent part 23 of the connecting member 20 by welding or the like. Furthermore, the reinforcement member 50 is provided on the inner side of the upper member 31. Details of the reinforcement member 50 will be described later.

As shown in Figure 2 to Figure 6, the lower member 33 is a member disposed on the vehicle lower side of the upper member 31, and is a member formed of a metallic material. As in the upper member 31, the lower member 33 has a predetermined length in the vehicle width direction. Furthermore, the lower member 33 forms substantially a semicircle that opens vehicle-upward as viewed in the vehicle width direction. An upper end on the front side of the lower member 33 extends in the vehicle width direction, and the lower end on the front side of the upper member 31 is joined to this part as described above. In addition, an outer end in the vehicle width direction of the lower member 33 is formed in substantially a semicircular shape as described above, and the outer member 35 is joined to this part by welding or the like, as in the upper member 31. Moreover, an upper end on the rear side of the lower member 33 extends in the vehicle width direction, and a lower surface of the connecting part 21 of the connecting member 20 is joined to this part by welding or the like.

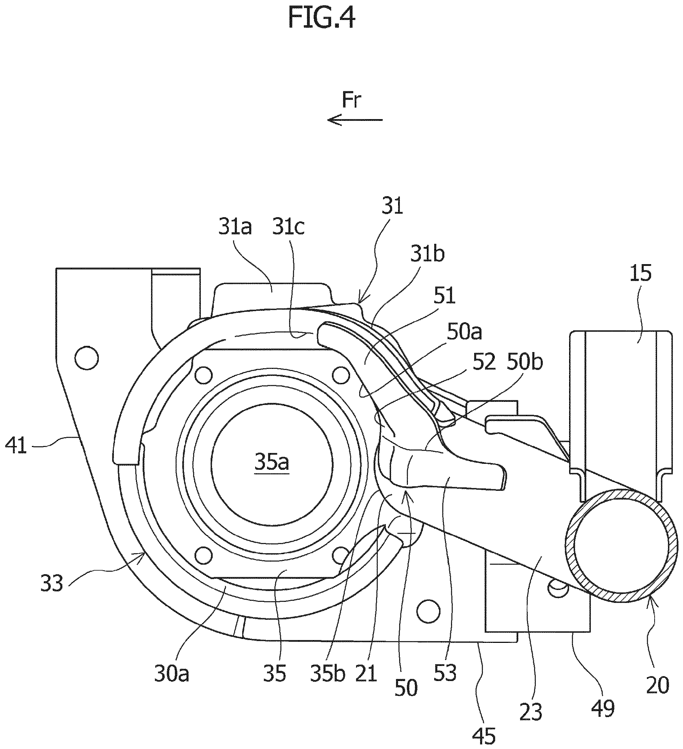

As shown in Figure 2 and Figure 4, the upper member 31 and the lower member 33 are joined together to form a hollow main body having a so-called "MONAKA" structure. The cylindrical part 30a extending in the vehicle width direction is formed in this main body. The cylindrical part 30a and the connecting part 21 of the connecting member 20 extend in the vehicle width direction and are parallel to each other. A rear portion of the cylindrical part 30a is provided with a width-direction opening 30b extending in the vehicle width direction. In this example, in a state in which the upper member 31 and the lower member 33 are joined together to form a so-called "C-like" shape that opens vehicle-rearward as shown in Figure 2, as viewed from the inner side in the vehicle width direction.

In the present embodiment, the lower end on the rear side of the upper member 31 and the upper end on the rear side of the lower member 33 are arranged so as to be spaced apart from each other in the vehicle height direction, and this space serves as the width-direction opening 30b. Furthermore, the connecting part 21 of the connecting member 20 is fixed to the rear portion of the cylindrical part 30a in a state of being arranged in the width-direction opening 30b. In this example, the upper surface and the lower surface of the connecting part 21 of the connecting member 20 are joined to an opening edge of the width-direction opening 30b.

As described above, the reinforcement member 50 is provided on the inner side of the upper portion (the upper member 31) of the cylindrical part 30a. As shown in Figure 2 to Figure 7, the reinforcement member 50 extends so as to connect an inner surface 31c of the upper member 31 and the bent part 23 of the connecting member 20. The reinforcement member 50 is formed so as to correspond to a curved shape of the inner surface 31c of the upper member 31. The curved shape corresponds to an arc-like shape of the inner surface 31c of the upper member 31 in a vehicle side view (Figure 4). In the present embodiment, the inner end in the vehicle width direction of the upper part of the reinforcement member 50 is formed so as to correspond to the shape of the inner end (the enlarged part 31b) in the vehicle width direction in the inner surface 31c of the upper member 31. Specifically, the inner end in the vehicle width direction of the upper part of the reinforcement member 50 is gradually inclined inward in the vehicle width direction and vehicle-downward toward the vehicle rear side. The inner end in the vehicle width direction of the upper part of the reinforcement member 50 thus formed and the inner end (the enlarged part 31b) in the vehicle width direction of the inner surface 31c of the upper member 31 are joined together by welding or the like. The lower part of the reinforcement member 50 is joined to an outer surface of the bent part 23 of the connecting member 20 by welding or the like.

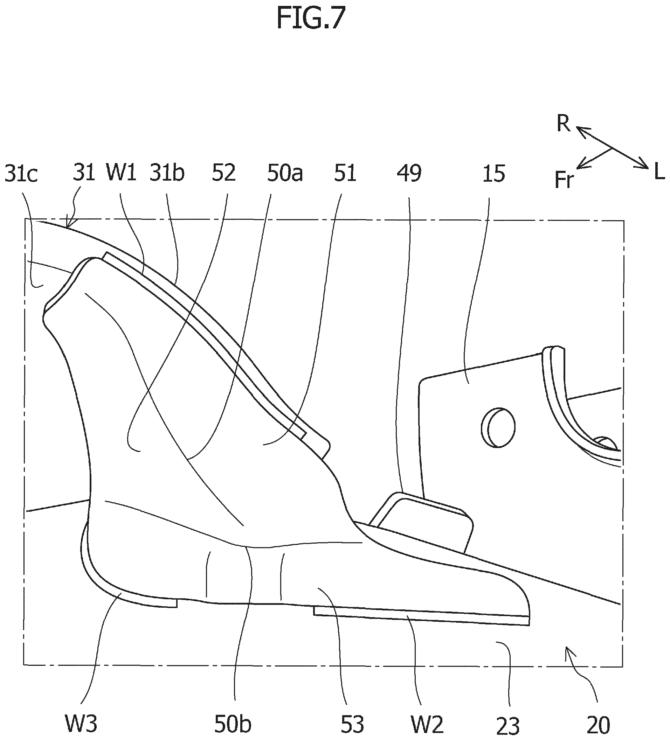

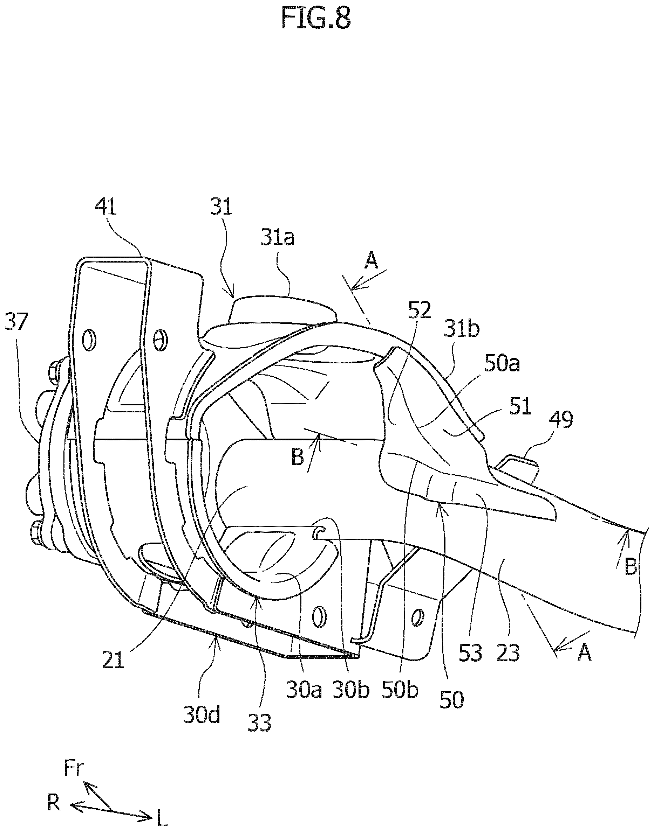

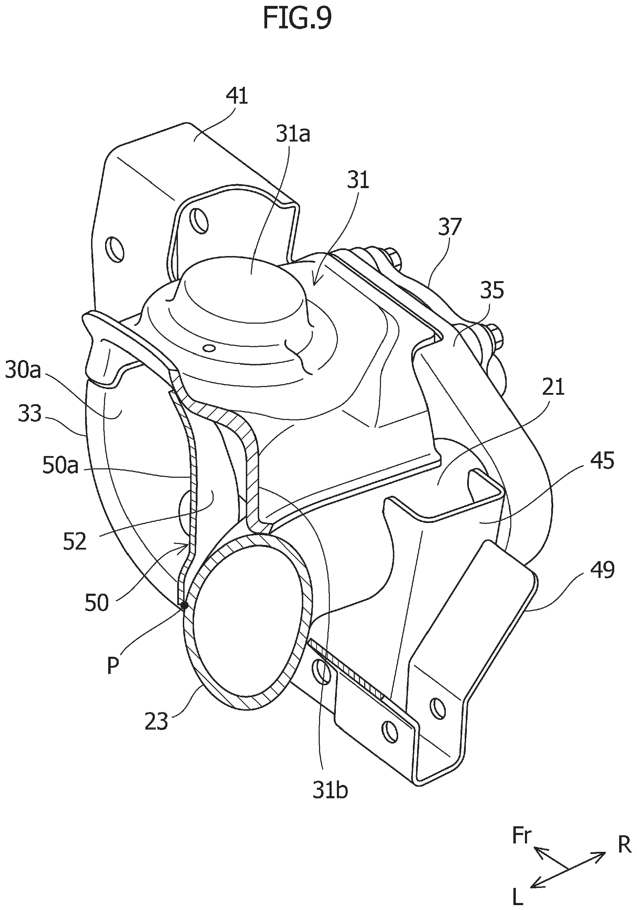

Specifically, the reinforcement member 50 is a plate-shaped member formed of a metallic material, as shown in the enlarged perspective view of Figure 7, and has a plurality of (for example, three in this case) surfaces 51, 52, 53. A first surface 51 of the reinforcement member 50 is formed so as to face the inner side of the vehicle, and a second surface 52 is formed so as to face the front side of the vehicle. A first ridge line 50a is provided at a boundary between the first surface 51 and the second surface 52. The first ridge line 50a extends so as to be gradually inclined inward in the vehicle width direction and vehicle-rearward toward the vehicle lower side from a position in the inner surface 31c of the upper member 31, the position corresponding to the spring installation part 31a. The direction in which an extension line of the first ridge line 50a extends is a tangential direction at a point P where the extension line contacts an outer surface of the connecting member 20, as shown in Figure 9 (the perspective sectional view taken along line A-A in Figure 8). That is, the extension line of the first ridge line 50a is smoothly continuous with the outer surface of the bent part 23 of the connecting member 20. It should be noted that the line A-A in Figure 8 is a line along the first ridge line 50a. An upper rear end of the first surface 51 is joined to an inner end in the vehicle width direction at the inner surface 31c of the upper member 31 via a first welded part W1 (Figure 7).

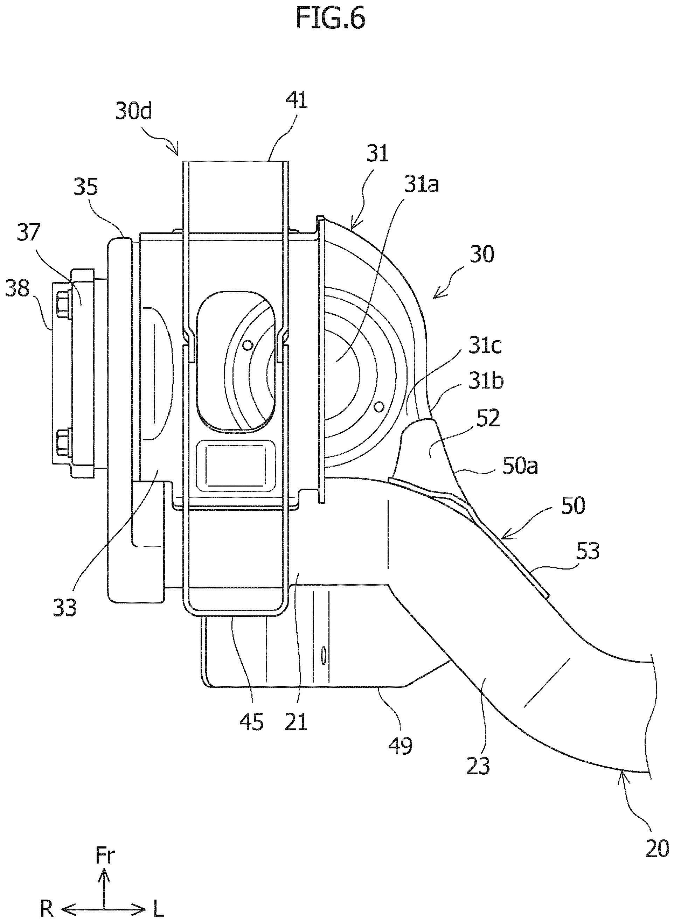

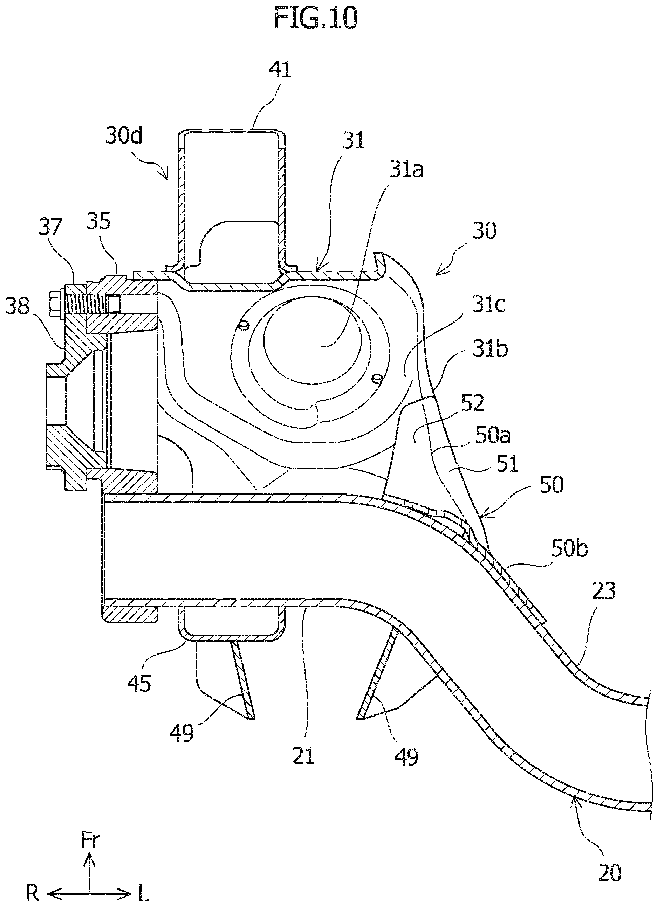

A third surface 53 of the reinforcement member 50 extends along a lower portion of the first surface 51 and a lower portion of the second surface 52, as shown in Figure 7. An inner end in the vehicle width direction of the third surface 53 is continuously connected to the outer surface of the bent part 23 of the connecting member 20. The third surface 53 in the present embodiment extends along the outer surface of the bent part 23 (Figure 6). A second ridge line 50b is provided at a boundary between the third surface 53, and the first surface 51 and the second surface 52. The second ridge line 50b gently bends vehicle-rearward near the position where the second ridge line intersects the extension line of the first ridge line. The second ridge line 50b extends along the longitudinal direction of the bent part 23 of the connecting member 20, as shown in Figure 10 (the perspective sectional view taken along line B-B of Figure 8). It should be noted that the line B-B of Figure 8 is a line along the second ridge line 50b. A lower end of the third surface 53 located on the inner side in the vehicle width direction is joined to the outer surface of the bent part 23 of the connecting member 20 by a second welded part W2 (Figure 7). Furthermore, a lower end of the third surface 53 located on the outer side in the vehicle width direction is joined to the outer surface of the bent part 23 of the connecting member 20 via a third welded part W3. The third welded part W3 is formed so as to wrap around a corner on the outer side in the vehicle width direction of the third surface 53 from a lower end of the third surface 53.

As shown in Figure 2 to Figure 6, the outer member 35 is a member made of a metallic material and fixed on the outer side in the vehicle width direction of the upper member 31 and the lower member 33, and is a plate-shaped member that closes an end in the vehicle width direction of the cylindrical part 30a and extends in the vehicle front-rear direction. The outer member 35 has a first through-hole (through-hole) 35a through which the drive shaft 12 is disposed and a second through-hole 35b into which the connecting member 20 is fixed. A fixing member 37 is fixed around the first through-hole 35a. The fixing member 37 is a plate-shaped member having a through-hole at its center, and this through-hole communicates with the first through-hole 35a.

The cylindrical part 30a of the present embodiment is provided with an arm fixing part 30d to which a trailing arm 14 extending in the vehicle front-rear direction is fixed (Figure 11). The arm fixing part 30d has a front bracket 41 and a rear bracket 45, and these brackets are configured to partially surround the cylindrical part 30a from the vehicle lower side. An absorber receiving member 49 (Figure 2 to Figure 6) to which a shock absorber 18 (Figure 11) is installed is joined to the rear bracket 45. The absorber receiving member 49 is also joined to a rear surface of the bent part 23 of the connecting member 20.

In the present embodiment, a hub fixing part 38 is provided on an outer portion in the vehicle width direction of the cylindrical part 30a. In this example, the hub fixing part 38 is provided on the fixing member 37 fixed to the outer member 35, as described above. Furthermore, in the hub fixing part 38, the hub is fixed in an inner region of the cylinder located on the outer side in the vehicle width direction of the cylindrical part 30a.

Next, the operation of the vehicle suspension structure of the present embodiment will be described.

In the above-configured vehicle suspension structure of the present embodiment, the spring installation part 31a is provided on the upper portion of the cylindrical part 30a including the upper member 31 and the lower member 33. Furthermore, the lower end on the rear side of the upper member 31 is joined to the connecting part 21 of the connecting member 20. That is, in the present embodiment, the spring installation part 31a is connected to the connecting member 20 via a cylindrical rear wall portion of the upper member 31. By forming the hub carrier 30 in a cylindrical shape, a stress concentration can be reduced with respect to a load input from the suspension spring 19, and the stress due to the load can be distributed to the trailing arm 14 and the connecting member 20 having high rigidity; and as a result, the rigidity and strength of the hub carrier 30 can be enhanced.

In addition, in the present embodiment, the reinforcement member 50 extends so as to connect the inner side of the upper member 31 corresponding to the spring installation part 31a to the connecting member 20. By providing this reinforcement member 50, a stress due to a load input from the suspension spring 19 is transmitted to the connecting member 20 via not only the upper member 31 of the hub carrier 30 but also the reinforcement member 50. Accordingly, it is possible to reduce the deformation of the hub carrier 30, and prevent the performance deterioration of the rear suspension 10. Furthermore, since the reinforcement member 50 is formed with the plurality of surfaces 51 to 53 and ridge lines 50a, 50b provided across the upper member 31 and the connecting member 20, to thereby increase the strength of the reinforcement member 50 and enhance the stress transmission efficiency. Furthermore, the extension lines of the ridge lines 50a, 50b of the reinforcement member 50 are connected to the outer surface of the bent part 23 of the connecting member 20; therefore, the stress concentration can be prevented, to thereby efficiently distribute the stress to the connecting member 20.

In the vehicle suspension structure of the present embodiment, it is configured that the first ridge line 50a between the first surface 51 and the second surface 52 of the reinforcement member 50 extends to be gradually inclined inward in the vehicle width direction and vehicle-rearward toward the vehicle lower side from the spring installation part 31a; and at the same time, the direction in which the extension line of the first ridge line 50a extends is configured to be the tangential direction at the point where the extension line contacts the outer surface of the connecting member 20. In such a configuration of the reinforcement member 50, the extension line of the first ridge line 50a is smoothly continuous with the outer surface of the connecting member 20, thus effectively reducing the deformation of the upper member 31 of the cylindrical hub carrier 30, and also preventing a stress concentration at the joint part (the second welded part W2) between the lower end located on the inner side in the vehicle width direction of the reinforcement member 50 and the connecting member 20.

In the vehicle suspension structure of the present embodiment, the inner end in the vehicle width direction (the upper rear end of the first surface 51) in the upper part of the reinforcement member 50 is formed so as to correspond to the shape of the inner end (the enlarged part 31b) in the vehicle width direction in the inner surface 31c of the upper portion (the upper member 31) of the cylindrical part 30a, and the respective ends are joined together. Furthermore, the inner end in the vehicle width direction in the lower part of the reinforcement member 50 is continuously connected to the outer surface of the bent part 23 of the connecting member 20. According to this reinforcement member 50, a stress due to a load input from the suspension spring 19 is efficiently distributed to the reinforcement member 50 via the joint part (the first welded part W1) between the upper member 31 and the reinforcement member 50, and transmitted to the connecting member 20, thus more effectively reducing the deformation of the upper member 31 of the cylindrical hub carrier 30. In addition, it is possible to prevent a stress concentration at the joint part (the first welded part W1) between the upper member 31 and the reinforcement member 50, and also at the joint parts (the second and third welded parts W2, W3) of the reinforcement member 50.

In the vehicle suspension structure of the present embodiment, the reinforcement member 50 has the third surface 53 and the second ridge line 50b, the third surface 53 is joined to the connecting member 20, and the second ridge line 50b extends along the longitudinal direction of the bent part 23 of the connecting member 20. According to this reinforcement member 50, a stress transmitted to the first surface 51, the second surface 52, and the first ridge line 50a of the reinforcement member 50 can be more efficiently transmitted to the connecting member 20 via the third surface 53 and the second ridge line 50b, thus more effectively preventing a stress concentration on the hub carrier 30 and the reinforcement member 50.

The description of the present embodiment is an example for explaining the present invention, and it does not limit the invention as in the claims. Furthermore, the configuration of each part of the present invention is not limited to the above embodiments, and various modifications can be made within the technical scope in the claims.

In the present embodiment, the cylindrical part 30a of the hub carrier 30 includes the upper member 31 and the lower member 33 that are arranged in the height direction, but it is not limited to this. The cylindrical part 30a may include a single member. Although an example in which the reinforcement member 50 has the three surfaces 51 to 53 is shown, the reinforcement member 50 may be formed with two surfaces, or with four or more surfaces, and the number of ridge lines may be appropriately set according to the number of the surfaces. Furthermore, although an example in which the reinforcement member 50 is joined to the inner end in the vehicle width direction of the inner surface 31c of the upper member 31 is shown, the joint position between the inner surface 31c of the upper member 31 and the reinforcement member 50 is not limited to the above example; and the reinforcement member 50 may be joined at any position in the inner surface 31c corresponding to the spring installation part 31a.

### [Reference Signs List]

10 rear suspension
11 rear wheel
12 drive shaft
14 trailing arm
15 rod fixing bracket
17 lateral rod
18 shock absorber
19 suspension spring
20 connecting member
21 connecting part
22 intermediate part
23 bent part
30 hub carrier
30a cylindrical part
30b width-direction opening
30d arm fixing part
31 upper member
31a spring installation part
31b enlarged part
33 lower member
35 outer member
35a first through-hole (through-hole)
35b second through-hole
37 fixing member
38 hub fixing part
41 front bracket
45 rear bracket
49 absorber receiving member
50 reinforcement member
50a first ridge line
50b second ridge line
51 first surface
52 second surface
53 third surface

## Claims

1. A vehicle comprising a vehicle suspension structure of an axle suspension type, the vehicle suspension structure including: hub carriers (30) through which a drive shaft (12) extending in a vehicle width direction is disposed, hubs for wheels being fixed to the hub carriers (30); and a connecting member (20) that connects the hub carriers (30) on both sides in the vehicle width direction,
wherein outer parts in the vehicle width direction of the connecting member (20) are provided with connecting parts (21) that are connected to the hub carriers (30), an intermediate part (22) in the vehicle width direction of the connecting member (20) is offset vehicle-rearward from the drive shaft (12) and extends in the vehicle width direction, outer portions in the vehicle width direction of the intermediate part (22) are provided with bent parts (23) that are bent vehicle-frontward and connected to the connecting parts (21),
the hub carriers (30) each have a cylindrical part (30a) extending in the vehicle width direction, and a through-hole (35a) through which the drive shaft (12) is inserted is provided at an outer end in the vehicle width direction of the cylindrical part (30a),
the vehicle being **characterized in that**
an upper portion of the cylindrical part (30a) is provided with a spring installation part (31a) on which a suspension spring (19) is installed,
a reinforcement member (50) extending so as to connect an inner side of the cylindrical part (30a) and the connecting member (20) is provided on the inner side of the cylindrical part (30a) corresponding to the spring installation part (31a),
the reinforcement member (50) corresponds to a curved shape of an inner surface (31c) of the upper portion of the cylindrical part (30a) and is joined to the inner surface (31c), and
the reinforcement member (50) is formed with a plurality of surfaces (51, 52, 53), and extension lines of ridge lines (50a, 50b) formed between adjacent surfaces (51, 52, 53) are connected to an outer surface of the bent part (23) of the connecting member (20),
the plurality of surfaces (51, 52, 53) includes a first surface (51) facing a vehicle inner side and a second surface (52) facing a vehicle front side,
the ridge lines (50a, 50b) include a first ridge line (50a) serving as a boundary between the first surface (51) and the second surface (52),
the first ridge line (50a) extends so as to be gradually inclined inward in the vehicle width direction and vehicle-rearward toward a vehicle lower side from the spring installation part (31a), and
a direction in which the extension line of the first ridge line (50a) extends is a tangential direction at a point where the extension line contacts an outer surface of the connecting member (20).

2. The vehicle according to claim 1, wherein
an inner end in the vehicle width direction in an upper part of the reinforcement member (50) is formed so as to correspond to a shape of an inner end in the vehicle width direction of an inner surface (31c) of an upper portion of the cylindrical part (30a),
the inner end in the vehicle width direction in the upper part of the reinforcement member (50) and the inner end in the vehicle width direction of the inner surface of the upper portion of the cylindrical part (30a) are joined together, and
an inner end in the vehicle width direction in a lower part of the reinforcement member (50) is connected continuously to the outer surface of the bent part (23).

3. The vehicle according to claim 1, wherein
the plurality of surfaces (51, 52, 53) includes a third surface (53) extending along a lower portion of the first surface (51) and a lower portion of the second surface (52), and
the ridge lines (50a, 50b) include a second ridge line (50b) serving as a boundary between the third surface (53), and the first surface (51) and the second surface (52), and the second ridge line (50b) extends along a longitudinal direction of the bent part (23).

## Patentansprüche

1. Fahrzeug, umfassend eine Fahrzeug-Aufhängungsstruktur von einem Achsaufhängung-Typ, wobei die Fahrzeug-Aufhängungsstruktur umfasst: Nabenträger (30), durch welche eine Antriebswelle (12), welche sich in einer Fahrzeug-Breitenrichtung erstreckt, angeordnet ist, Naben für Räder, welche an den Nabenträgern (30) befestigt sind; und ein Verbindungselement (20), welches die Nabenträger (30) an beiden Seiten in der Fahrzeug-Breitenrichtung verbindet,
wobei äußere Teile in der Fahrzeug-Breitenrichtung des Verbindungselements (20) mit Verbindungsteilen (21) bereitgestellt sind, welche mit den Nabenträgern (30) verbunden sind, ein Zwischenteil (22) in der Fahrzeug-Breitenrichtung des Verbindungselements (20) nach Fahrzeug-hinten von der Antriebswelle (12) versetzt ist und sich in der Fahrzeug-Breitenrichtung erstreckt, äußere Abschnitte in der Fahrzeug-Breitenrichtung des Zwischenteils (22) mit gebogenen Teilen (23) bereitgestellt sind, welche nach Fahrzeug-vorne gebogen sind und mit den Verbindungsteilen (21) verbunden sind,
die Nabenträger (30) jeweils einen zylindrischen Teil (30a) aufweisen, welcher sich in der Fahrzeug-Breitenrichtung erstreckt, und ein Durchgangsloch (35a), durch welches die Antriebswelle (12) eingesetzt ist, an einem äußeren Ende in der Fahrzeug-Breitenrichtung des zylindrischen Teils (30a) bereitgestellt ist,
wobei das Fahrzeug **dadurch gekennzeichnet ist, dass**
ein oberer Abschnitt des zylindrischen Teils (30a) mit einem Feder-Installationsteil (31a) bereitgestellt ist, an welchem eine Aufhängungsfeder (19) installiert ist,
ein Verstärkungselement (50), welches sich derart erstreckt, dass es eine innere Seite des zylindrischen Teils (30a) und das Verbindungselement (20) verbindet, an der inneren Seite des zylindrischen Teils (30a) dem Feder-Installationsteil (31a) entsprechend bereitgestellt ist,
das Verstärkungselement (50) einer gekrümmten Form einer inneren Fläche (31c) des oberen Abschnitts des zylindrischen Teils (30a) entspricht und mit der inneren Fläche (31c) verbunden ist, und
das Verstärkungselement (50) mit einer Mehrzahl von Flächen (51, 52, 53) gebildet ist, und Erstreckungslinien von Gratlinien (50a, 50b), welche zwischen benachbarten Flächen (51, 52, 53) gebildet sind, mit einer äußeren Fläche des gebogenen Teils (23) des Verbindungselements (20) verbunden sind,
die Mehrzahl von Flächen (51, 52, 53) eine erste Fläche (51), welche zu einer Fahrzeug-Innenseite weist, und eine zweite Fläche (52) umfasst, welche zu einer Fahrzeug-Vorderseite weist,
die Gratlinien (50a, 50b) eine erste Gratlinie (50a) umfassen, welche als eine Grenze zwischen der ersten Fläche (51) und der zweiten Fläche (52) dient,
sich die erste Gratlinie (50a) derart erstreckt, dass sie graduell nach innen in der Fahrzeug-Breitenrichtung und nach Fahrzeug-hinten in Richtung einer Fahrzeug-Unterseite von dem Feder-Installationsteil (31a) geneigt ist, und
eine Richtung, in welcher sich die Erstreckungslinie der ersten Gratlinie (50a) erstreckt, eine tangentiale Richtung an einem Punkt ist, an welchem die Erstreckungslinie eine äußere Fläche des Verbindungselements (20) kontaktiert.

2. Fahrzeug nach Anspruch 1, wobei
ein inneres Ende in der Fahrzeug-Breitenrichtung in einem oberen Teil des Verstärkungselements (50) derart gebildet ist, dass es einer Form eines inneren Endes in der Fahrzeug-Breitenrichtung einer inneren Fläche (31c) eines oberen Abschnitts des zylindrischen Teils (30a) entspricht,
das innere Ende in der Fahrzeug-Breitenrichtung in dem oberen Teil des Verstärkungselements (50) und das innere Ende in der Fahrzeug-Breitenrichtung der inneren Fläche des oberen Abschnitts des zylindrischen Teils (30a) miteinander verbunden sind, und
ein inneres Ende in der Fahrzeug-Breitenrichtung in einem unteren Teil des Verstärkungselements (50) kontinuierlich mit der äußeren Fläche des gebogenen Teils (23) verbunden ist.

3. Fahrzeug nach Anspruch 1, wobei
die Mehrzahl von Flächen (51, 52, 53) eine dritte Fläche (53) umfasst, welche sich entlang eines unteren Abschnitts der ersten Fläche (51) und eines unteren Abschnitts der zweiten Fläche (52) erstreckt, und
die Gratlinien (50a, 50b) eine zweite Gratlinie (50b) umfassen, welche als eine Grenze zwischen der dritten Fläche (53) und der ersten Fläche (51) und der zweiten Fläche (52) dient, und sich die zweite Gratlinie (50b) entlang einer longitudinalen Richtung des gebogenen Teils (23) 4erstreckt.

## Revendications

1. Véhicule comprenant une structure de suspension de véhicule d'un type suspension d'essieu, la structure de suspension de véhicule comportant : des porte-moyeux (30) à travers lesquels est disposé un arbre d'entraînement (12) s'étendant dans une direction de largeur de véhicule, des moyeux pour roues étant fixés aux porte-moyeux (30) ; et un élément de liaison (20) qui relie les porte-moyeux (30) sur les deux côtés dans la direction de largeur de véhicule,
dans lequel des parties externes dans la direction de largeur de véhicule de l'élément de liaison (20) sont dotées de parties de liaison (21) qui sont reliées aux porte-moyeux (30), une partie intermédiaire (22) dans la direction de largeur de véhicule de l'élément de liaison (20) est décalée vers l'arrière de véhicule par rapport à l'arbre d'entraînement (12) et s'étend dans la direction de largeur de véhicule, des portions externes dans la direction de largeur de véhicule de la partie intermédiaire (22) sont dotées de parties courbées (23) qui sont courbées vers l'avant de véhicule et reliées aux parties de liaison (21),
les porte-moyeux (30) présentent chacun une partie cylindrique (30a) s'étendant dans la direction de largeur de véhicule, et un trou traversant (35a) à travers lequel est inséré l'arbre d'entraînement (12) est disposé à une extrémité externe dans la direction de largeur de véhicule de la partie cylindrique (30a),
le véhicule étant **caractérisé en ce que**
une portion supérieure de la partie cylindrique (30a) est dotée d'une partie d'installation à ressort (31a) sur laquelle est installé un ressort de suspension (19),
un élément de renfort (50) s'étendant de façon à relier un côté interne de la partie cylindrique (30a) et l'élément de liaison (20) est disposé sur le côté interne de la partie cylindrique (30a) correspondant à la partie d'installation à ressort (31a),
l'élément de renfort (50) correspond à une forme incurvée d'une surface interne (31c) de la portion supérieure de la partie cylindrique (30a) et est joint à la surface interne (3 1c), et
l'élément de renfort (50) est formé avec une pluralité de surfaces (51, 52, 53) et des lignes d'extension de lignes de crête (50a, 50b) formées entre des surfaces adjacentes (51, 52, 53) sont reliées à une surface externe de la partie courbée (23) de l'élément de liaison (20),
la pluralité de surfaces (51, 52, 53) comporte une première surface (51) faisant face à un côté interne de véhicule et une deuxième surface (52) faisant face à un côté avant de véhicule,
les lignes de crête (50a, 50b) comportent une première ligne de crête (50a) servant de limite entre la première surface (51) et la deuxième surface (52),
la première ligne de crête (50a) s'étend de façon à être inclinée progressivement vers l'avant dans la direction de largeur de véhicule et vers l'arrière de véhicule vers un côté inférieur de véhicule à partir de la partie d'installation à ressort (31a), et
une direction dans laquelle s'étend la ligne d'extension de la première ligne de crête (50a) est une direction tangentielle à un point où la ligne d'extension entre en contact avec une surface externe de l'élément de liaison (20).

2. Véhicule selon la revendication 1, dans lequel
un côté interne dans la direction de largeur de véhicule dans une partie supérieure de l'élément de renfort (50) est formé de façon à correspondre à une forme d'une extrémité interne dans la direction de largeur de véhicule d'une surface interne (31c) d'une partie supérieure de la partie cylindrique (30a),
l'extrémité interne dans la direction de largeur de véhicule dans la partie supérieure de l'élément de renfort (50) et l'extrémité interne dans la direction de largeur de véhicule de la surface interne de la portion supérieure de la partie cylindrique (30a) sont jointes l'une à l'autre, et
une extrémité interne dans la direction de largeur de véhicule dans une partie inférieure de l'élément de renfort (50) est reliée en continu à la surface externe de la partie courbée (23).

3. Véhicule selon la revendication 1, dans lequel
la pluralité de surfaces (51, 52, 53) comporte une troisième surface (53) s'étendant le long d'une portion inférieure de la première surface (51) et d'une portion inférieure de la deuxième surface (52), et
les lignes de crête (50a, 50b) comportent une deuxième ligne de crête (50b) servant de limite entre la troisième surface (53) et la première surface (51) et la deuxième surface (52), et la deuxième ligne de crête (50b) s'étend le long d'une direction longitudinale de la partie courbée (23).
